# EUROPEAN PATENT APPLICATION

(11) **EP 2 698 194 A1**
(43) Date of publication of application: **19.02.2014**
(21) Application number: 13178950.5
(22) Date of filing: 01.08.2013
(51) Int. Cl.: B01D 67/00, B01D 69/02

(54) **Membrane with multiple size fibers**

(30) Priority: 16.08.2012 US 201213587286
(71) Applicant: Pall Corporation, Port Washington, NY 11050 (US)
(72) Inventor: WANG, I-Fan, San Diego, CA California 92128 (US); SINGH, Amarnauth, Selden, NY New York 11784 (US)
(74) Representative: Hoeger, Stellrecht & Partner Patentanwälte

(57) **Abstract**

Membranes including at least two sets of fibers having different average diameters, as well as methods of using and methods of making the membranes are disclosed.

## Description

### BACKGROUND OF THE INVENTION

Synthetic polymer membranes are used for filtration in a variety of applications. However, there is a need for membranes that provide sufficient strength and sufficient retention of undesirable material while providing good throughput.

The invention provides such membranes.

These and other advantages of the present invention will be apparent from the description as set forth below.

### BRIEF SUMMARY OF THE INVENTION

An embodiment of the invention provides a porous polymeric membrane comprising a first porous surface; a second porous surface; and, a bulk between the first surface and the second surface, wherein the bulk comprises at least first and second sets of a plurality of fibers, wherein the first set of fibers has a first average fiber diameter, and the second set of fibers has a second average fiber diameter, wherein the first average fiber diameter is larger than the second average fiber diameter.

In another embodiment, a method for making porous polymeric membranes including fibers is provided, the method comprising casting a polymer solution on a support; inducing thermal phase inversion of the solution; and, quenching an upper portion of the solution before the solution reaches thermal equilibrium.

In other embodiments, methods of using the membranes and devices including the membranes are provided.

### BRIEF DESCRIPTION OF THE SEVERAL VIEWS OF THE DRAWING(S)

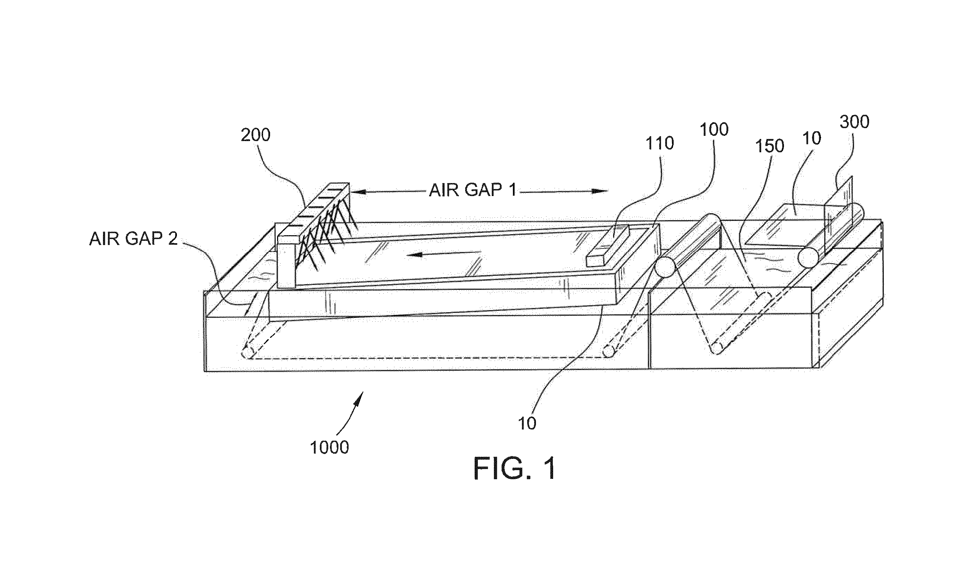

Figure 1 show an illustrative system for preparing embodiments of membranes according to the present invention, the illustrated system including a water bath to heat a stone having a cast solution thereon, the illustration also showing first and second air gaps.

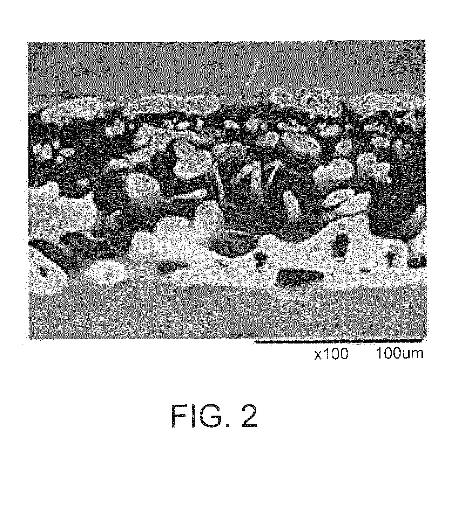

Figure 2 is a cross-sectional view of a membrane according to an embodiment of the present invention, showing first and second sets of fibers, wherein the first set of fibers has a first average fiber diameter, and the second set of fibers has a second average fiber diameter, wherein the first average fiber diameter is larger than the second average fiber diameter.

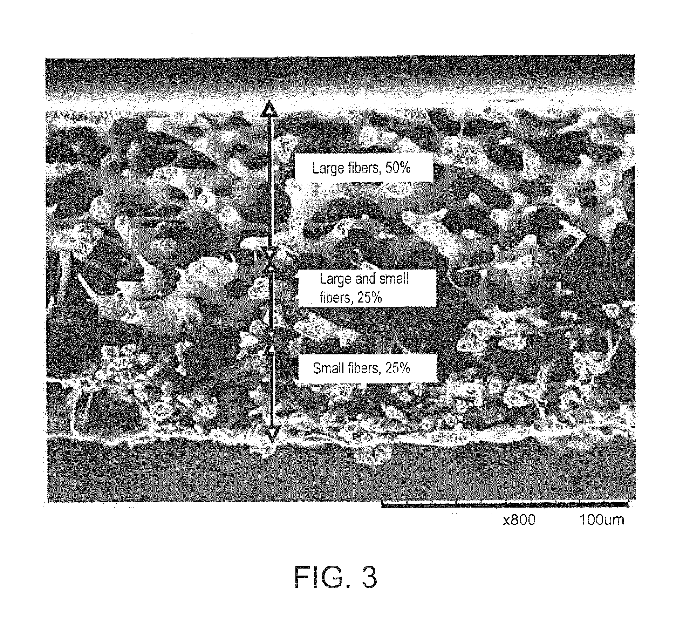

Figure 3 is a cross-sectional view of a membrane according to another embodiment of the present invention, showing first and second sets of fibers, wherein the first set of fibers has a first average fiber diameter, and the second set of fibers has a second average fiber diameter, wherein the first average fiber diameter is larger than the second average fiber diameter, and wherein the view also shows the percentages of the shown portion of the membrane comprising the larger average diameter fibers, the smaller average diameter fibers, and comprising both the larger and smaller average diameter fibers.

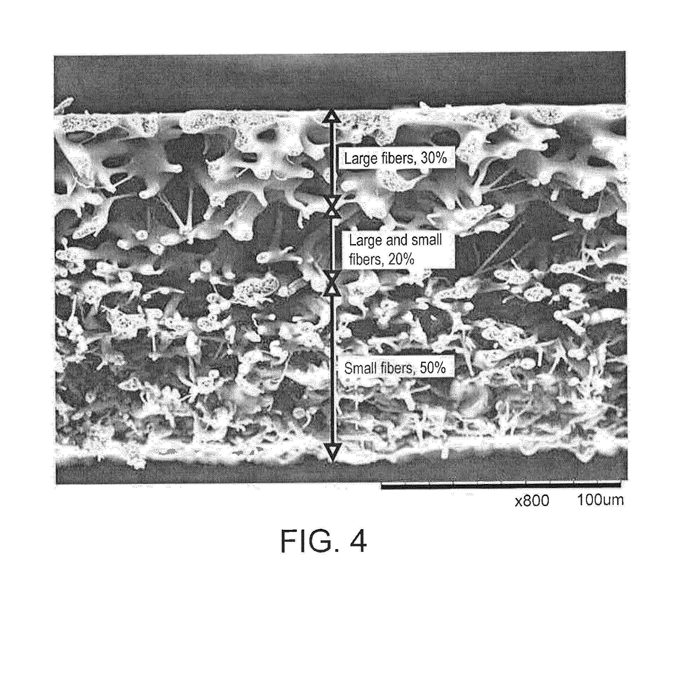

Figure 4 is a cross-sectional view of a membrane according to another embodiment of the present invention, showing first and second sets of fibers, wherein the first set of fibers has a first average fiber diameter, and the second set of fibers has a second average fiber diameter, wherein the first average fiber diameter is larger than the second average fiber diameter, and wherein the view also shows the percentages of the shown portion of the membrane comprising the larger average diameter fibers, the smaller average diameter fibers, and comprising both the larger and smaller average diameter fibers.

### DETAILED DESCRIPTION OF THE INVENTION

In accordance with an embodiment of the present invention, a porous polymeric membrane is provided comprising a first porous surface; a second porous surface; and, a bulk between the first surface and the second surface, wherein the bulk comprises at least first and second sets of a plurality of fibers, wherein the first set of fibers has a first average fiber diameter, and the second set of fibers has a second average fiber diameter, wherein the first average fiber diameter is at least about 10% larger than the second average fiber diameter.

In another embodiment, a porous polymeric membrane comprises a first porous surface; a second porous surface; and, a bulk between the first surface and the second surface, wherein the bulk comprises a reticulate network of at least first and second sets of a plurality of continuous fibers, wherein, in a cross-sectional view vertical to the porous surfaces, the first set of fibers has a first average fiber diameter, and the second set of fibers has a second average fiber diameter, wherein the first average fiber diameter is at least 10% larger than the second average fiber diameter.

In some embodiments, at least one set of the fibers is porous.

In an embodiment, the first set of fibers has an average fiber diameter in the range of from about 5 µm to about 50 µm, typically, an average fiber diameter in the range of from about 5 µm to about 30 µm, preferably, an average fiber diameter in the range of from about 8 µm to about 15 µm. Alternatively, or additionally, in an embodiment, the second set of fibers has an average fiber diameter in the range of from about 0.1 µm to about 3 µm.

Typically, the polymeric membrane comprises a sulfone membrane, preferably, a sulfone membrane, more preferably, a polyethersulfone membrane.

Another embodiment of the invention comprises a method for processing a fluid, the method comprising passing the fluid through an embodiment of the membrane. In a preferred embodiment, the method comprises filtering an ink-containing fluid by passing it through an embodiment of the membrane.

In yet another embodiment, a method for making porous polymeric membranes including fibers is provided, the method comprising casting a polymer solution on a support; inducing thermal phase inversion of the solution; and, quenching an upper portion of the solution before the solution reaches thermal equilibrium. The set membrane can be separated from the support and leached to remove the solvent and other soluble ingredients (alternatively, the set membrane can be removed from the support before or during leaching). The separated membrane can be dried, or kept wet.

In other embodiments, devices including the membranes are provided. For example, in one embodiment, the membrane is arranged in a device such that it is in the ink flowpath between a reservoir of ink, and at least one ink jet nozzle. Illustratively, in an embodiment, a device comprises a filter capsule for ink jet filtration, the capsule comprising a housing containing ink and having a port communicating with an ink jet nozzle, and a filter comprising an embodiment of the membrane across a fluid flow path between the ink and the ink jet nozzle(s) via the port. Optionally, the device comprises an opaque housing to protect against UV-light intrusion.

Advantageously, polymer membranes including a plurality of fiber diameters can be provided, using polymers that are not typically melt-blown, without the need to blend polymers. In another advantage, the membranes provide sufficient strength and sufficient retention of undesirable material while providing good throughput. With respect to ink jet applications in particular, the membranes capture particles, preventing or minimizing nozzle clogging, while allowing high flow, preventing or minimizing nozzle starvation and allowing more complete emptying of the ink cartridge, with a reduced footprint compared to conventional membranes for ink jet applications. Without being bound to any particular theory or mechanism, it is believed larger particles are retained by the larger fiber structure, and smaller particles are retained by the smaller fiber structure.

In view of the strength of membranes according to embodiments of the invention, in some applications, the membranes can be unsupported membranes.

Membranes according to embodiments of the invention can be used in a variety of applications, including, for example, ink jet applications (as noted above), diagnostic applications (including, for example, sample preparation and/or diagnostic lateral flow devices), filtering fluids for the pharmaceutical industry, filtering fluids for medical applications (including for home and/or for patient use, e.g., intravenous applications, also including, for example, filtering biological fluids such as blood (e.g., to remove leukocytes)), filtering fluids for the electronics industry, filtering fluids for the food and beverage industry, clarification, filtering antibody- and/or protein-containing fluids, cell detection (including *in situ*), cell harvesting, and/or filtering cell culture fluids. Alternatively, or additionally, membranes according to embodiments of the invention can be used to filter air and/or gas and/or can be used for venting applications (e.g., allowing air and/or gas, but not liquid, to pass therethrough). Membranes according to embodiments of the inventions can be used in a variety of devices, including surgical devices and products, such as, for example, ophthalmic surgical products.

As used herein, the term "skin" (in the first and/or second "microporous skin surface") does not indicate the relatively thick, nearly impervious layer of polymer that is present in some membranes. Here, the microporous skin is a relatively thin, porous surface that overlies a microporous region of variable thickness. The pores of the underlying microporous region may be the same size as, or somewhat smaller than, the skin pores. In some embodiments of membranes according to the invention wherein the first microporous skin surface has a pore structure (e.g., a mean pore size) that is less than the pore structure (e.g., a mean pore size) of the second porous surface, the opposite face of the membrane (the second porous surface) can be referred to as the dull, or coarse pored skin surface.

The membranes can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating that reduces or allows the passage therethrough of one or more materials of interest as the fluid is passed through the porous media. The pore structure used depends on the size of the particles to be utilized, the composition of the fluid to be treated, and the desired effluent level of the treated fluid.

The porous surfaces of the membranes can have any suitable mean pore size, e.g., as determined by, for example, calculating the average surface pore size from an SEM micrograph at 800X magnification. Typically, at least the first microporous skin surface has a mean pore size of at least about 1 µm. In some embodiments, the first microporous skin surface has a mean pore size of at least about 5 µm, or at least about 10 µm. Typically, the mean pore size of the second microporous surface is greater than the mean pore size of the first microporous surface. In some embodiments, the second microporous skin surface has a mean pore size of at least about 15 µm, or at least about 20 µm. Typically, the mean pore size of the second microporous skin surface is in the range of from about 20 µm to about 100 µm.

The bulk of the membrane comprises a network of continuous fibers (sometimes referred to as "strands" or "fibrous elements"). By continuous, it is meant that the substantially all of the fibers are integrally interconnected (e.g., formed together) without using a separate binder or separate binding material. The fibers elements cannot be separated from each other without tearing. Additionally, the first and second porous surfaces (preferably microporous skin surfaces) are continuous with substantially all of the first and second sets of fibers .

A variety of fiber diameters (e.g., average fiber diameters) are suitable for embodiments of membranes according to the invention, and embodiments can include a plurality of sets of fibers having different fiber diameters. Fiber diameters, including average fiber diameters, can be determined and/or calculated as is known in the art, for example, by using software (such as, for example, available from MathWorks® (e.g., MATLAB), or Nikon (e.g., NIS-Element)) or by manual measurement. Typically, embodiments of membranes include at least a first set and a second set of fibers, wherein the first set of fibers has an average fiber diameter in the range of from about 5 µm to about 50 µm, typically an average fiber diameter in the range of from about 5 µm to about 30 µm, preferably, an average fiber diameter in the range of from about 8 µm to about 15 µm, and the second set of fibers has an average fiber diameter in the range of from about 0.1 µm to about 3 µm.

Membranes according to embodiments of the invention can have any ratio of first set of fibers (e.g., larger average diameter fibers) to second set of fibers (e.g., smaller average diameter fibers). In one embodiment, the ratio of smaller average diameter fibers:larger average diameter fibers is 2:1.

Typically, membranes according to the invention have a thickness in the range of from about 70 µm to about 300 µm, preferably in the range of from about 80 µm to about 150 µm.

Membranes according to embodiments of the invention can have first and second surfaces comprising microporous skin surfaces wherein the first and second surfaces have mean pore sizes that are substantially the same, or some embodiments of membranes can have a first surface comprising a microporous surface and a second porous surface (in some embodiments the second porous surface comprising a microporous skin surface) comprising pores, wherein the second surface has a mean pore size that is greater than the mean pore size of the pores in the first microporous skin surface.

Membranes according to embodiments of the invention can be isotropic (the pore structure is essentially the same through the bulk of the membrane), anisotropic (e.g., the pore structure decreases in size from one portion or surface to another portion or surface; or the pore structure goes through a minimum pore size at a position within the thickness of the anisotropic membrane), or multitropic (e.g., the pore structure is formed as an irregular or regular pattern through the bulk of the membrane).

In some embodiments, the bulks of membranes according to embodiments of the invention have a mean flow pore size (MFP size) in the range of from about 1 µm to about 20 µm. In other illustrative embodiments, the membranes have a MFP size of at least about 8 µm, for example, at least about 11 µm, or greater.

Isotropic membranes (and some embodiments of multitropic membranes) according to the invention have first and second surfaces comprising microporous skin surfaces wherein the surfaces have mean pore sizes that are substantially the same. For example, the second microporous skin surface can have a mean pore size that is about 1 to about 1.2 times the mean pore size of the pores in the first microporous skin surface.

Anisotropic (asymmetric) membranes have a pore structure (e.g., a mean flow pore size) varying throughout the bulk of the membrane. For example, the mean pore size decreases in size from one portion or surface to another portion or surface (e.g., the mean flow pore size decreases from the upstream portion or surface to the downstream portion or surface). However, other types of asymmetry are encompassed by embodiments of the invention, e.g., the pore size goes through a minimum pore size at a position within the thickness of the asymmetric membrane. The asymmetric membrane can have any suitable pore size gradient or ratio. This asymmetry can be measured by, for example, comparing the mean pore size on one major surface of a membrane with the mean pore size of the other major surface of the membrane.

In those embodiments wherein the inventive membrane comprises an asymmetric membrane (and some embodiments wherein the inventive membrane comprises a multitropic membrane), the second porous surface comprises pores having a mean pore size that is greater than the mean pore size of the pores in the first microporous skin surface. Typically, the second surface has a mean pore size that is at least about 1.3 times the mean pore size of the first surface. In some embodiments, the mean pore size of the second surface is at least about 1.5 times, or at least about 2 times, the mean pore size of the first surface, for example, in the range of from about 3 to about 15 times the mean pore size of the first surface.

Advantageously, membranes according to the invention provide good throughput (flow rate), typically, at least about 1500 ml/min@4 inches water pressure, preferably, at least about 2000 ml/min@4 inches water pressure.

Alternatively, or additionally, membranes according to the invention have a delta P transmembrane pressure (TMP) of about 150 Pascal (Pa) or less, preferably, about 125 Pa or less. For example, in some embodiments, the TMP is in the range of about 30 to about 100 Pa.

Membranes according to the invention can have a water bubble point of at least about 20 inches of water.

Advantageously, membranes can be tailored for particular applications.

Each of the components of the invention will now be described in more detail below, wherein like components have like reference numbers.

Preferably, the membrane is prepared by a thermally induced phase inversion process. During the phase inversion process, an initially homogeneous polymer solution becomes thermodynamically unstable due to different external effects, and induces phase separation into a polymer lean phase and a polymer rich phase. The polymer rich phase forms the matrix of the membrane, and the polymer lean phase, having increased levels of solvents and non-solvents, forms the pores.

Thermal phase inversion can be carried out using a variety of techniques and systems. For example, a casting bed, belt, or stone (or moving carrier or support thereon) can be heated using, illustratively, a heating pad, heating lamp, another heated object, a fluid circulation system, or a water bath. Typically, thermal phase inversion is carried out using a temperature of at least about 80 °F, preferably, at least about 85 °F, and in some embodiments, at least about 90 °F, for at least about 30 seconds, preferably, at least about 35 seconds, and in some embodiments, in the range of from about 40 seconds to about 70 seconds.

Preferably, the quench liquid (e.g., warm water) is applied to the upper surface of the cast solution (the surface not in contact with the casting bed, belt, stone, or support) before the solution reaches thermal equilibrium. Typically, the quench liquid has a temperature that is greater than the temperature of the casting bed, belt, or stone (or moving carrier or support thereon) having the cast solution thereon. In some embodiments, the quench liquid has a temperature that is at least about 10 °F greater than the temperature of the casting bed, belt, or stone (or moving carrier or support thereon) having the cast solution thereon; preferably, at least about 15 °F greater, and in some embodiments, at least about 25 °F greater. Illustratively, in an embodiment wherein the solution is cast on a support passed over a stone having a temperature in the range of from about 80 to about 90 °F, the quench liquid can have a temperature of at least about 110 °F.

Illustratively, using the exemplary system 1000 shown in Figure 1 for reference, a polymer solution is cast (using knife 110), typically on a moving belt/support 10, that moves over a stone 100 (in the casting direction shown by the single arrow on the stone) and into a quenching bath 150 (that may also provide a heating bath for heating the stone; alternatively, the stone could be heated by using, for example, at least one heating belt (not shown)), such that the quench liquid contacts the upper surface of the solution before the lower surface (e.g, covered by the belt/support which can be peeled off later) is contacted by the liquid.

If air velocity is desired, the system can include one or more fans to provide air velocity. Figure 1 shows six fans 200.

In some embodiments, the membrane can comprise two or more layers, e.g., a first solution is spread in a layer onto a support, and a second solution is spread in a layer onto the first solution, and the membrane can be later separated from the support after quenching. In some embodiments wherein the membrane comprises more than two layers, the solutions can be spread on each other in the desired order. Alternatively, or additionally, laminates can be prepared, e.g., as described in U.S. Patent 6,596,112.

The membranes can be cast manually (e.g., poured, cast, or spread by hand onto a casting surface) or automatically (e.g., poured or otherwise cast onto a moving bed). Examples of suitable supports include, for example, polyethylene coated paper, or polyester (such as MYLAR).

A variety of casting techniques, including dual casting techniques, are known in the art and are suitable. A variety of devices known in the art can be used for casting. Suitable devices include, for example, mechanical spreaders, that comprise spreading knives, doctor blades, or spray/pressurized systems. One example of a spreading device is an extrusion die or slot coater, comprising a casting chamber into which the casting formulation (solution comprising a polymer) can be introduced and forced out under pressure through a narrow slot. Illustratively, the first and second solutions comprising polymers can be separately cast by means of a doctor blade with knife gaps in the range from about 70 micrometers to about 300 micrometers, more typically in the range from about 80 micrometers to about 150 micrometers. The knife gaps can be different for the first and second solutions.

A variety of air gaps are suitable for use in the invention, and the air gaps can be the same for the same for the knives/doctor blades, or different. Typically, the first air gaps are in the range of from about 3 inches to about 80 inches, more typically, in the range of from about 12 inches to about 45 inches. Typically, the second air gaps are in the range of from about 1 inch to about 30 inches, more typically, in the range of from about 2 inches to about 12 inches.

A variety of casting speeds are suitable as is known in the art. Typically, the casting speed is at least about 2 feet per minute (fpm), e.g., with knife air gaps of at least about 3 inches.

A variety of polymer solutions are suitable for use in the invention, and are known in the art. Suitable polymer solutions can include, polymers such as, for example, polyaromatics; sulfones (e.g., polysulfones, including aromatic polysulfones such as, for example, polyethersulfone, polyether ether sulfone, bisphenol A polysulfone, polyarylsulfone, and polyphenylsulfone), polyamides, polyimides, polyvinylidene halides (including polyvinylidene fluoride (PVDF)), polyolefins, such as polypropylene and polymethylpentene, polyesters, polystyrenes, polycarbonates, polyacrylonitriles (including polyalkylacrylonitriles), cellulosic polymers (such as cellulose acetates and cellulose nitrates), fluoropolymers, and polyetherether ketone (PEEK). Polymer solutions can include a mixture of polymers, e.g., a hydrophobic polymer (e.g., a sulfone polymer) and a hydrophilic polymer (e.g., polyvinylpyrrolidone).

Typically, the polymer solution(s) have a solids concentration of at least about 10%.

In addition to one or more polymers, typical polymer solutions comprise at least one solvent, and may further comprise at least one non-solvent. Suitable solvents include, for example, dimethyl formamide (DMF); N,N-dimethylacetamide (DMAC); N-methyl pyrrolidone (NMP); dimethyl sulfoxide (DMSO), methyl sulfoxide, tetramethylurea; dioxane; diethyl succinate; dimethylsulfoxide; chloroform; and tetrachloroethane; and mixtures thereof. Suitable nonsolvents include, for example, water; various polyethylene glycols (PEGs; e.g., PEG-200, PEG-300, PEG-400, PEG-1000); various polypropylene glycols; various alcohols, e.g., methanol, ethanol, isopropyl alcohol (IPA), amyl alcohols, hexanols, heptanols, and octanols; alkanes, such as hexane, propane, nitropropane, heptanes, and octane; and ketone, ethers and esters such as acetone, butyl ether, ethyl acetate, and amyl acetate; and various salts, such as calcium chloride, magnesium chloride, and lithium chloride; and mixtures thereof.

If desired, a solution comprising a polymer can further comprise, for example, one or more polymerization initiators (e.g., any one or more of peroxides, ammonium persulfate, aliphatic azo compounds (e.g., 2,2'-azobis(2-amidinopropane) dihydrochloride (V50)), and combinations thereof), and/or minor ingredients such as surfactants and/or release agents.

Suitable components of solutions are known in the art. Illustrative solutions comprising polymers, and illustrative solvents and nonsolvents include those disclosed in, for example, U.S. Patents 4,340,579; 4,629,563; 4,900,449; 4,964,990, 5,444,097; 5,846,422; 5,906,742; 5,928,774; 6,045,899; 6,146,747; and 7,208,200.

In accordance with the invention, in those embodiments including two or more layers, layers of the membrane can be formed from the same polymer and solvent, varying the viscosity, additives, and treatment, or different polymers can be used for different layers.

The membrane can have any desired critical wetting surface tension (CWST, as defined in, for example, U.S. Patent 4,925,572). The CWST can be selected as is known in the art, e.g., as additionally disclosed in, for example, U.S. Patents 5,152,905, 5,443,743, 5,472,621, and 6,074,869. For applications wherein liquid passes through the membrane, the membrane is typically hydrophilic, having a CWST of 72 dynes/cm (72 x 10-5 N/cm) or more. In some embodiments, the element has a CWST of 75 dynes/cm (about 75 x 10-5 N/cm) or more. However, for some other application wherein liquid does not pass through the membrane (e.g., for venting applications), the membrane can be hydrophobic, having a CWST of less than 72 dynes/cm (72 x 10-5 N/cm).

The surface characteristics of the membrane can be modified (e.g., to affect the CWST, to include a surface charge, e.g., a positive or negative charge, and/or to alter the polarity or hydrophilicity of the surface) by wet or dry oxidation, by coating or depositing a polymer on the surface, or by a grafting reaction. Modifications include, e.g., irradiation, a polar or charged monomer, coating and/or curing the surface with a charged polymer, and carrying out chemical modification to attach functional groups on the surface. Grafting reactions may be activated by exposure to an energy source such as gas plasma, vapor plasma, corona discharge, heat, a Van der Graff generator, ultraviolet light, electron beam, or to various other forms of radiation, or by surface etching or deposition using a plasma treatment.

A device comprising at least one membrane according to an embodiment of the invention can include additional elements, layers, or components, that can have different structures and/or functions, e.g., at least one of prefiltration, support, drainage, spacing and cushioning. Illustratively, an embodiment of the device can also include at least one additional element such as a mesh and/or a screen.

In accordance with embodiments of the invention, the membrane can have a variety of configurations, including planar, pleated, and hollow cylindrical.

The membrane, in some embodiments, a filter comprising the membrane (and the filter can comprise a plurality of filter elements) can be utilized with a housing to provide a device such as a filter device. For example, as previously noted, in one embodiment, a device comprises a filter capsule for ink jet filtration, the capsule comprising a housing containing ink and having a port communicating with an ink jet nozzle, and a filter comprising an embodiment of the membrane across a fluid flow path between the ink and the ink jet nozzle(s) via the port. Optionally, the device comprises an opaque housing to protect against UV-light intrusion. In another embodiment, the membrane or filter comprising the membrane is disposed in a housing, e.g., comprising at least one inlet and at least one outlet and defining at least one fluid flow path between the inlet and the outlet, wherein the filter is across the fluid flow path, to provide a filter device. In some embodiments, the filter device is sterilizable. Any housing of suitable shape and, if desired, providing at least one of any of the following: a port, an inlet, and an outlet, may be employed.

The housing can be fabricated from any suitable rigid impervious material, including any impervious thermoplastic material, which is compatible with the fluid being processed. For example, the housing can be fabricated from a metal, such as stainless steel, or from a polymer.

The following examples further illustrate the invention but, of course, should not be construed as in any way limiting its scope.

In the following examples, a system is set up as generally shown in Figure 1, to produce membrane 300. Six fans are used to provide air velocity. Solutions are cast on a moving MYLAR belt.

### EXAMPLE 1

This example demonstrates the preparation of a membrane according to an embodiment of the invention.

A solution consisting of 11.0% PSF (P-3500), 2.0% DI water, 5.25% PVP (k-90), 19.5% PEG200, and 62.25% NMP is cast on a moving MYLAR belt (at a casting speed of 4 fpm), using a casting knife having a knife gap of 13 mils and a first air gap of 32 inches. The fan speed is 60 watts, and the second air gap is 6 inches.

Following casting, the belt having the cast solution thereon is passed over a heated stone (heated to a temperature of about 90 °F) for 45 seconds and then the solution is quenched in the quenching bath with water at a temperature of about 127 °F--the water contacting the top of the solution (the surface of the solution not contacting the MYLAR belt) before the solution reaches thermal equilibrium.

A cross-sectional SEM view of the integral membrane having reticulate continuous fibers is shown in Figure 2.

The depth of each of the first and second skin surfaces, that are continuous with the large and small fibers, is in the range of from about 5 to about 10 µm.

Using scanning electron micrographs and manually measuring fiber diameters, the average fiber diameters of the larger and smaller fibers is 10 µm and 1 µm, respectively.

The membrane has a tensile strength of about 390 gF, and a particle retention size rating of about 12 µm.

### EXAMPLE 2

This example demonstrates the preparation of a membrane according to an embodiment of the invention, and demonstrates the percentages of the non-voids portion of the membrane comprising larger average diameter fibers, the smaller average diameter fibers, and comprising both the larger and smaller average diameter fibers.

A solution as described in Example 1 is cast on a moving MYLAR belt (at a casting speed of 4 fpm), using a casting knife having a knife gap of 13 mils (.013 inches) and a first air gap of 30 inches. The fan speed is 70 watts, and the second air gap is 6 inches.

Following casting, the belt having the cast solution thereon is passed over a heated stone (heated to a temperature of about 85 °F) for 45 seconds and then the solution is quenched in the quenching bath with water at a temperature of about 125 °F--the water contacting the top of the solution (the surface of the solution not contacting the MYLAR belt) before the solution reaches thermal equilibrium.

A cross-sectional SEM view of the integral membrane having reticulate continuous fibers is shown in Figure 3.

Figure 4 also shows the percentages of the shown portion of the membrane comprising the larger average diameter fibers, the smaller average diameter fibers, and comprising both the larger and smaller average diameter fibers, using MathWorks® MATLAB software. The shown portion includes a voids portion and a non-voids portion. About 50% of the non-voids portion substantially comprises larger average diameter fibers, about 25% of the non-voids portion substantially comprises smaller average diameter fibers, and about 25% of the non-voids portion substantially comprises both larger and smaller average diameter fibers.

The surface porosity of the first and second skin surfaces, calculated using MATLAB software, is 23% and 46%, respectively.

The depth of each of the first and second skin surfaces, that are continuous with the large and small fibers, is in the range of from about 5 to about 10 µm.

Using scanning electron micrographs and manually measuring fiber diameters, the average fiber diameters of the larger and smaller fibers is about 10 µm and about 1 µm, respectively.

### EXAMPLE 3

This example demonstrates the preparation of a membrane according to an embodiment of the invention.

A solution consisting of 10.7% PSF (P-3500), 2.0% DI water, 5.30% PVP (k-90), 19.5% PEG200, and 62.50% NMP is cast on a moving MYLAR belt (at a casting speed of 3.5 fpm), using a casting knife having a knife gap of 13 mils and a first air gap of 32 inches. The fan speed is 65 watts, and the second air gap is 6 inches.

Following casting, the belt having the cast solution thereon is passed over a heated stone (heated to a temperature of about 88 °F) for 60 seconds and then the solution is quenched in the quenching bath with water at a temperature of about 128.5 °F--the water contacting the top of the solution (the surface of the solution not contacting the MYLAR belt) before the solution reaches thermal equilibrium.

The depth of each of the first and second skin surfaces, that are continuous with the large and small fibers, is in the range of from about 5 to about 10 µm.

Using scanning electron micrographs and manually measuring fiber diameters, the average fiber diameters of the larger and smaller fibers is 10-12 µm and 0.5-0.8 µm, respectively.

### EXAMPLE 4

This example demonstrates the preparation of a membrane according to an embodiment of the invention.

A solution consisting of 10.8% PSF (P-3500), 2.0% DI water, 5.30% PVP (k-90), 19.5% PEG200, and 62.40% NMP is cast on a moving MYLAR belt (at a casting speed of 3.5 fpm), using a casting knife having a knife gap of 13 mils and a first air gap of 32 inches. The fan speed is 65 watts, and the second air gap is 6 inches.

Following casting, the belt having the cast solution thereon is passed over a heated stone (heated to a temperature of about 88 °F) for 60 seconds and then the solution is quenched in the quenching bath with water at a temperature of about 128 °F--the water contacting the top of the solution (the surface of the solution not contacting the MYLAR belt) before the solution reaches thermal equilibrium.

The depth of each of the first and second skin surfaces, that are continuous with the large and small fibers, is in the range of from about 5 to about 10 µm.

Using scanning electron micrographs and manually measuring fiber diameters, the average fiber diameters of the larger and smaller fibers is 9-10 µm and 1 µm, respectively.

### EXAMPLE 5

This example demonstrates the preparation of a membrane according to an embodiment of the invention, and demonstrates the percentages of the non-voids portion of the membrane comprising larger average diameter fibers, the smaller average diameter fibers, and comprising both the larger and smaller average diameter fibers.

A solution as described in Example 1 is cast on a moving MYLAR belt (at a casting speed of 4.5 fpm), using a casting knife having a knife gap of 13 mils and a first air gap of 30 inches. The fan speed is 70 watts, and the second air gap is 6 inches.

Following casting, the belt having the cast solution thereon is passed over a heated stone (heated to a temperature of about 85 °F) for 40 seconds and then the solution is quenched in the quenching bath with water at a temperature of about 125 °F--the water contacting the top of the solution (the surface of the solution not contacting the MYLAR belt) before the solution reaches thermal equilibrium.

A cross-sectional SEM view of the integral membrane having reticulate continuous fibers is shown in Figure 4.

Figure 4 also shows the percentages of the shown portion of the membrane comprising the larger average diameter fibers, the smaller average diameter fibers, and comprising both the larger and smaller average diameter fibers, using MathWorks® MATLAB software. The shown portion includes a voids portion and a non-voids portion. About 30% of the non-voids portion substantially comprises larger average diameter fibers, about 50% of the non-voids portion substantially comprises smaller average diameter fibers, and about 20% of the non-voids portion substantially comprises both larger and smaller average diameter fibers.

The surface porosity of the first and second skin surfaces, calculated using MATLAB software, is 24% and 46%, respectively.

The depth of each of the first and second skin surfaces, that are continuous with the large and small fibers, is in the range of from about 5 to about 10 µm.

Using scanning electron micrographs and manually measuring fiber diameters, the average fiber diameters of the larger and smaller fibers is about 10 µm and about 1 µm, respectively.

### EXAMPLE 6

This comparative example demonstrates the importance of quenching before the solution reaches thermal equilibrium.

A solution as described in Example 1 is cast on a moving MYLAR belt (at a casting speed of 3 fpm), using a casting knife having a knife gap of 13 mils, a first air gap of 32 inches, and a second air gap of 3 inches. The fan speed is 70 watts.

Following casting, the belt having the cast solution thereon is passed over a heated stone (heated to a temperature of about 105 °F) for 55 seconds and then the solution is quenched in the quenching bath with water at a temperature of about 127 °F such that the water contacts the top of the solution (the surface of the solution not contacting the MYLAR belt) after the solution reaches thermal equilibrium.

The membrane has only large fibers.

The membrane has a tensile strength of about 390 gram force (gF), and a particle retention size rating of about 22 µm.

### EXAMPLE 7

This comparative example demonstrates the importance of a second air gap and thermal phase inversion.

A solution consisting of 9.0% PSF (P-3500), 2.0% DI water, 4.3% PVP (k-90), 19.5% PEG200, and 65.2% NMP is cast on a moving MYLAR belt (at a casting speed of 4 fpm), using a casting knife having a knife gap of 13 mils, a first air gap of 30 inches and a second air gap of 0 inches. The fan speed is 85 watts.

Following casting, the belt having the cast solution thereon is passed over a heated stone (heated to a temperature of about 80 °F) for 40 seconds and then quenched in the quenching bath with water at a temperature of about 110 °F such that the water contact the top of the solution (the surface of the solution not contacting the MYLAR belt) before the solution reaches thermal equilibrium. The non-solvent induces phase separation, not thermal phase inversion.

The membrane has only small fibers.

The membrane has a tensile strength of about 100 gF, and a particle retention size rating of about 12 µm.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A porous polymeric membrane comprising:
(a) a first microporous surface;
(b) a second microporousporous surface; and,
(c) a bulk between the first surface and the second surface, wherein the bulk comprises at least a first set of a plurality of fibers and a second set of a plurality of fibers, wherein at least some fibers from the first set are continuous with some fibers from the second set, wherein the first set of fibers has a first average fiber diameter, and the second set of fibers has a second average fiber diameter, wherein the first average fiber diameter is at least 10% larger than the second average fiber diameter.

2. A porous polymeric membrane comprising:
(a) a first microporous surface;
(b) a second microporous surface; and,
(c) a bulk between the first surface and the second surface, wherein the bulk comprises a reticulate network of at least first and second sets of a plurality of continuous fibers, wherein, in a cross-sectional view vertical to the porous surfaces, the first set of fibers has a first average fiber diameter, and the second set of fibers has a second average fiber diameter, wherein the first average fiber diameter is at least 10% larger than the second average fiber diameter.

3. The membrane of claim 1 or 2, wherein the first microporous skin surface and the second microporous skin surface are continuous with some of the first and second sets of fibers.

4. The membrane of any one of claims 1-3, wherein the first microporous skin surface has a surface porosity of at least about 17%.

5. The membrane of any one of claims 1-4, wherein the second microporous skin surface has a surface porosity of at least about 35%.

6. The membrane of any one of claims 3-5, wherein the first microporous skin surface and the second microporous skin surface each have a thickness of at least about 4 micrometers.

7. The membrane of any one of claims 3-6, wherein the first microporous skin surface and the second microporous skin surface each have a thickness of about 14 micrometers or less.

8. The membrane of any one of claims 1-7, wherein at least the set of fibers having the larger average fiber diameter are porous.

9. The membrane of any one of claims 1-8, wherein the first set of fibers has an average fiber diameter in the range of from about 8 µm to about 20 µm.

10. The membrane of any one of claims 1-9, wherein the first set of fibers has an average fiber diameter in the range of from about 10 µm to about 15 µm.

11. The membrane of any one of claims 1-10, wherein the second set of fibers has an average fiber diameter in the range of from about 0.1 µm to about 3 µm.

12. The membrane of any one of claims 1-11, having a mean flow pore size in the range of from about 3 to about 20 µm.

13. A method for processing a fluid comprising:
passing the fluid through the membrane of any one of claims 1-12.

14. The method of claim 13, wherein the fluid is an ink-containing fluid.

15. A method for making porous polymeric membranes including fibers comprising:
(a) casting a polymer solution on a support;
(b) inducing thermal phase inversion of the solution; and,
(c) quenching the solution, including quenching an upper portion of the solution before the solution reaches thermal equilibrium.
